# EUROPÄISCHE PATENTSCHRIFT

(11) **EP 1 215 250 B1**
(45) Veröffentlichungstag und Bekanntmachung des Hinweises auf die Patenterteilung: **23.02.2005**
(21) Anmeldenummer: 00127343.2
(22) Anmeldetag: 13.12.2000
(51) Int. Cl.: C09D 11/00, B41J 2/01

(54) **Ink-Jet-Tinte und deren Verwendung zum Bedrucken transparenter Druckträger**
Ink-jet ink and its use in printing transparent printing medium
Encre Ink-Jet et son utilisation pour l'impression de substrats transparents

(43) Veröffentlichungstag der Anmeldung: 19.06.2002
(73) Patentinhaber: Tetenal Photowerk GmbH & Co, 22844 Norderstedt (DE)
(72) Erfinder: De Rossi, Umberto, Dr., 22844 Norderstedt (DE)
(74) Vertreter: Glawe, Delfs, Moll & Partner

(56) Entgegenhaltungen:
- EP-A- 0 810 266
- EP-A- 0 825 233
- DE-A- 19 547 800
- PATENT ABSTRACTS OF JAPAN vol. 1999, no. 13, 30. November 1999 (1999-11-30) & JP 11 217529 A (CANON INC), 10. August 1999 (1999-08-10)

## Beschreibung

Die Erfindung betrifft eine Ink-Jet-Tinte, mit einem Lösungsmittel und einem Pigmentfarbstoff. Tintenstrahldrucker arbeiten in der Regel entweder nach dem Continuous Stream (CS) oder dem Drop on Demand (DOD) Verfahren. Beim CS-Verfahren werden von einer oder mehreren Düsen fortlaufend feine Tröpfchen erzeugt, die von einem elektrostatischen Feld entweder auf das zu bedruckende Substrat oder zurück in eine Auffangvorrichtung in das Tintenreservoir geführt werden. Beim DOD-Verfahren wird Tinte nur dann ausgestoßen, wenn tatsächlich Substrat bedruckt werden soll. Der Ausstoß kann beispielsweise piezoelektrisch, durch Dampfblasenbildung oder dergleichen geschehen.

Graphisch darstellbare medizinische diagnostische Informationen wie Röntgenbilder, Tomogramme oder dergleichen werden im Stand der Technik üblicher Weise analog durch herkömmliche fotografische Silberhalogenid-Technologie aufgezeichnet. Gleichfalls bekannt ist es, elektronisch digitale gespeicherte diagnostische Informationen durch Laser- oder Thermodruckeinrichtungen auszubelichten.

Aus EP-A-0 987 119 ist es bekannt, zur Betrachtung im Durchlicht vorgesehene transparente Druckträger mit einer Kombination zweier Tinten im Ink-Jet-Verfahrens zu bedrucken. Die Kombination zweier Tinten soll den Ausdruck eines hinreichend großen Bereichs optischer Dichten ermöglichen, um einerseits schwarze Volltonflächen ausdrucken zu können und andererseits hinreichend feiner Abstufungen in den Grautönen zu erhalten.

Der Erfindung die liegt die Aufgabe zugrunde, eine Ink-Jet-Tinte der eingangs genannten Art zu schaffen, die auf einem transparenten Druckträger einerseits einen Ausdruck von Flächen hoher optischer Dichte gestattet und andererseits den fein abgestuften Ausdruck auch niedrigerer optischer Dichten.

Die Erfindung löst diese Aufgabe dadurch, daß die Tinte zusätzlich zu dem Pigmentfarbstoff einen in dem Lösungsmittel löslichen Farbstoff enthält, dessen Absorptionsmaximum in Wellenlängenbereich 500 bis 700nm, bevorzugt im Wellenbereich 550 bis 650nm liegt.

Zunächst seien einige im Rahmen der Erfindung verwendete Begriffe erläutert.

Der Begriff Pigmentfarbstoff umfaßt alle in der Tinte im wesentlichen unlösliche und darin dispergierbare partikuläre Farbstoffe. Es können organische oder anorganische Farbstoffpigmente verwendet werden. Besonders bevorzugt im Rahmen der Erfindung sind Schwarzpigmente beispielsweise auf der Basis von Ruß, die unter dem Handelsnamen "Pigment Black" (beispielsweise Pigment Black 7 oder Pigment Black 11) dem Fachmann geläufig sind. Der Begriff "Schwarzpigment" bezeichnet dabei im Rahmen der Erfindung jeden Pigmentfarbstoff, der dem Betrachter bei üblichem Tageslicht mit der Farbtemperatur 5000K im wesentlichen schwarz erscheint. Auch eine Mischfarbe zwischen braun und schwarz wird im Rahmen der Erfindung von diesem Begriff mit erfaßt.

Das Lösungsmittel kann erfindungsgemäß Wasser, ein oder mehrere organische Lösungsmittel oder Mischungen daraus umfassen.

Erfindungsgemäß enthält die Tinte zusätzlich zu den Pigmentfarbstoff einen in dem Lösungsmittel löslichen Farbstoff. "In dem Lösungsmittel löslich" bedeutet, daß dieser Farbstoff in dem verwendeten Lösungsmittel oder Lösungsmittelgemisch in Lösung gehen kann. Im Rahmen der Erfindung ist es jedoch nicht ausgeschlossen, das beispielsweise im Rahmen der Lagerung der Ink-Jet-Tinte ein Teil des löslichen Farbstoffs beispielsweise an der Oberfläche der Farbstoffpigmente absorbiert wird, sich dort anlagert und dergleichen.

Das Absorptionsmaximum dieses löslichen Farbstoffs liegt erfindungsgemäß zwischen 500 und 700nm, weiter bevorzugt zwischen 550 und 700nm, besonders bevorzugt zwischen 550 und 650nm. Absorptionsmaxima zwischen 500 und 550nm entsprechen rot bzw. rot-violetten Farbstoffen, 550 bis 600nm entspricht einem violetten Farbstoff und 600 bis 700nm einem blauen Farbstoff. Erfindungsgemäß kann es sich bei dem löslichen Farbstoff entweder um einen einzigen Farbstoff oder um eine Mischung zweier oder mehrerer Farbstoffe handeln, die zusammen als Mischung entsprechende Absorptionsmaxima aufweisen. Werden zwei oder mehrere lösliche Farbstoffe verwendet, findet eine subtraktive Farbmischung statt.

Der Kern der Erfindung liegt darin, die bei Pigmentfarbstoffen, insbesondere bei üblichen Schwarzpigmenten wie Ruß, im langwelligen Bereich des sichtbaren Lichts nachlassende Absorption gewissermaßen zu kompensieren durch den Zusatz eines löslichen Farbstoffes, der ein Absorptionsmaximum in dem genannten langwelligen Bereich besitzt. Mit der erfindungsgemäßen Tinte kann mit hoher optischer Dichte auf transparente Druckträger wie beispielsweise sogenannte Backlit-Folien zum Ausdruck von Röntgenbildern gedruckt werden, ohne daß übermäßig hohe Pigmentkonzentrationen aufgebracht werden müssen. Gleichzeitig kann die erfindungsgemäße Tinte fein abgestuft auch niedrige optische Dichten in neutralen Grautönen ausdrucken. Der bei Tinten des Standes der Technik häufig zu beobachtende Umschlag in ein Grau bzw. Schwarz mit bräunlichem Farbton findet nicht statt.

Der Anteil des löslichen Farbstoffs an der Tinte beträgt vorzugsweise 0,5 bis 20 Gew.-%, weiter vorzugsweise 1 bis 10 Gew.-%, besonders bevorzugt bis 4 bis 8 Gew.-%. Der Anteil des Pigmentfarbstoffs liegt bevorzugt zwischen 0,5 bis 20 Gew.-%, weiter vorzugsweise 1 bis 15 Gew.-%, weiter vorzugsweise 1 bis 5 Gew.-%, besonders bevorzugt 1,5 bis 3 Gew.-%. Die Verwendung von Schwarzpigmenten ist besonders bevorzugt. Wenn eine Tinte gewünscht ist, die besonders neutrale Schwarz- und Grautöne ausdrucken kann, wird das Mischungsverhältnis von löslichem und Pigmentfarbstoff bevorzugt so eingestellt, daß sich über den gesamten sichtbaren Spektralbereich von 400 bis 700nm eine im wesentlichen gleichmäßige Absorption einstellt. Der Anteil löslichen Farbstoffs wird demnach so gewählt, daß die bei höheren Wellenlängen absinkende Absorption des Pigmentfarbstoffs gerade kompensiert wird. Bei Bedarf können hierzu auch zwei oder mehr lösliche Farbstoffe verwendet werden, um ein besonders breites Absorptionsmaximum im genannten Wellenlängenbereich zu erhalten.

Der Pigmentfarbstoff weist bevorzugt eine mittlere Teilchengröße von 0,005 bis 15µm, weiter vorzugsweise 0,005 bis 5µm, weiter vorzugsweise 0,005 bis 1µm, weiter bevorzugt 0,005 bis 0,3µm auf.

Bevorzugt ist die erfindungsgemäße Tinte wasserbasiert. Sie enthält in diesem Fall Wasser als einziges oder hauptsächliches Lösungsmittel.

Die in Anspruch 1 enthaltene Aufzählung der Bestandteile der Tinte ist nicht abschließend. Die erfindungsgemäße Tinte kann weitere Bestandteile sowie Formulierungshilfsmittel enthalten. Beispielsweise können Feuchthaltemittel wie Polyalkohole oder dergleichen enthalten sein. Übliche Feuchthaltemittel umfassen Glykole wie Diethylenglykol, Glycerin und Polyethylenglykol, N-Methylpyrrolidon, 2-Pyrrolidon, N-Methyl-2-pyrrolidon, Isopropanol und dergleichen. Ferner kann die Tinte dem Fachmann geläufige weitere Hilfsmittel wie oberflächenaktive Stoffe, Biozide, Puffer, Komplexbildner oder Entschäumungsmittel enthalten.

Gegenstand der Erfindung ist ferner die Verwendung einer erfindungsgemäßen Tinte zum bedrucken transparenter Druckträger. Der Begriff "transparenter Druckträger" bezeichnet Druckträger, die vorzugsweise zur Durchlichtbetrachtung vorgesehen sind wie beispielsweise Backlit-Folien zum Ausdrucken von Röntgenbildern. Mit der erfindungsgemäßen Tinte können solche transparenten Druckträger mit einer optischen Dichte von wenigstens drei bedruckt werden. Die optische Dichte wird mit einem Durchlichtdensitometer gemessen. Es ist somit möglich, Röntgenbilder auszudrucken, die in den schwarzen Volltonflächen hohe optische Dichten von drei oder mehr aufweisen, die aber andererseits hinreichend feine Grauabstufungen aufweisen, ohne das optisch in den Schwarz- oder Grauflächen ein Farbumschlag in den bräunlichen Bereich auftritt. Die erfindungsgemäße Tinte eignet sich somit insbesondere zum Ausdrucken medizinischer Grafikdaten. Dieser Begriff bezeichnet jegliche medizinischen Informationen, insbesondere diagnostische Informationen, die sich bildlich darstellen lassen. Insbesondere umfaßt er Röntgenbilder, Tomogramme und dergleichen.

Ein Ausführungsbeispiel und ein Vergleichsbeispiel werden im folgenden erläutert.

### Vergleichsbeispiel

Es wird eine Ink-Jet-Tinte folgender Zusammensetzung hergestellt (alle Angaben in Gew.-%):
2% Pigment Black 7
5% Ethanol
20% Ethylenglykol
5% 1,2-Hexandiol
68% Wasser

Diese Tinte entspricht dem Stand der Technik, der lediglich Pigmentfarbstoffe enthält. Mit dieser Tinte wurden Röntgenbilder mittels eines Tintenstrahldruckers Epson® Stylus 600 auf eine Backlit-Folie (Tetenal Backlit-Film 130 µm) ausgedruckt. Das ausgedruckte Bild zeigt bräunliche Farbtöne und eine maximale optische Dichte von lediglich etwa 2,5.

### Beispiel

2% Pigment Black 7
5% Farbstoff B (Disazofarbstoff Food Black 2)
5% Ethanol
20% Ethylenglykol
5% 1,2-Hexandiol
68% Wasser

Diese erfindungsgemäße Tinte enthält den löslichen Farbstoff Food Black 2 mit einem Absorptionsmaximum im Bereich von 585 nm.

Mit dieser Tinte wurden ebenfalls Röntgenbilder ausgedruckt. Die höchsten optischen Dichten lagen bei 3,3. Die Grau- und Schwarztöne waren bei visueller Beurteilung neutral und zeigten keinen Unterschied im Vergleich mit einer entsprechend Original-Röntgenaufnahme, die herkömmlich durch Silberhalogenid-Technologie belichtet wurde.

## Patentansprüche

1. Ink-Jet-Tinte, enthaltend Lösungsmittel und Pigmentfarbstoff, **dadurch gekennzeichnet, dass** sie zusätzlich einen in dem Lösungsmittel löslichen Farbstoff enthält, dessen Absorptionsmaximum im Wellenlängenbereich 500 nm bis 700 nm liegt.

2. Ink-Jet-Tinte nach Anspruch 1, **dadurch gekennzeichnet, dass** das Absorptionsmaximum im Wellenlängenbereich 550 nm bis 650 nm liegt.

3. Ink-Jet-Tinte nach Anspruch 1 oder 2, **dadurch gekennzeichnet, dass** der Anteil des löslichen Farbstoffs 0,5 - 20 Gew.-% beträgt.

4. Ink-Jet-Tinte nach Anspruch 3, **dadurch gekennzeichnet, dass** der Anteil des löslichen Farbstoffs 1 - 10 Gew.-% beträgt.

5. Ink-Jet-Tinte nach Anspruch 4, **dadurch gekennzeichnet, dass** der Anteil löslichen Farbstoffs 4 - 8 Gew.-% beträgt.

6. Ink-Jet-Tinte nach einem der Ansprüche 1 bis 5, **dadurch gekennzeichnet, dass** der Anteil des Pigmentfarbstoffs 0,5 - 20 Gew.-% beträgt.

7. Ink-Jet-Tinte nach Anspruch 6, **dadurch gekennzeichnet, dass** der Anteil des Pigmentfarbstoffs 1 - 15 Gew.-% beträgt.

8. Ink-Jet-Tinte nach Anspruch 7, **dadurch gekennzeichnet, dass** der Anteil des Pigmentfarbstoffs 1 - 5 Gew.-% beträgt.

9. Ink-Jet-Tinte nach Anspruch 8, **dadurch gekennzeichnet, dass** der Anteil des Pigmentfarbstoffs 1,5 - 3 Gew.-% beträgt.

10. Ink-Jet-Tinte nach einem der Ansprüche 1 bis 9, **dadurch gekennzeichnet, dass** der Pigmentfarbstoff Schwarzpigment enthält.

11. Ink-Jet-Tinte nach einem der Ansprüche 1 bis 10, **dadurch gekennzeichnet, dass** der Pigmentfarbstoff eine mittlere Teilchengröße von 0,005 - 15 µm aufweist.

12. Ink-Jet-Tinte nach Anspruch 11, **dadurch gekennzeichnet, dass** der Pigmentfarbstoff eine mittlere Teilchengröße von 0,005 - 5 µm aufweist.

13. Ink-Jet-Tinte nach Anspruch 12, **dadurch gekennzeichnet, dass** der Pigmentfarbstoff eine mittlere Teilchengröße von 0,005 - 1 µm aufweist.

14. Ink-Jet-Tinte nach Anspruch 13, **dadurch gekennzeichnet, dass** der Pigmentfarbstoff eine mittlere Teilchengröße von 0,005 - 0,3 µm aufweist.

15. Ink-Jet-Tinte nach einem der Ansprüche 1 bis 14, **dadurch gekennzeichnet, dass** sie wasserbasiert ist.

16. Verwendung einer Ink-Jet-Tinte nach einem der Ansprüche 1 bis 15 zum Bedrucken transparenter Druckträger.

17. Verwendung nach Anspruch 16, **dadurch gekennzeichnet, dass** die bedruckten Flächen wenigstens teilweise im Durchlicht eine optische Dichte von wenigstens 3 aufaufweisen.

18. Verwendung einer Ink-Jet-Tinte nach einem der Ansprüche 1 bis 15 zum Ausdrucken medizinischer Grafikdaten.

## Claims

1. Ink-jet ink comprising solvent and pigment dye, **characterized in that** it further comprises a dye which is soluble in the solvent and whose absorption maximum is situated in the wavelength range 500 nm to 700 nm.

2. Ink-jet ink according to Claim 1, **characterized in that** the absorption maximum is situated in the wavelength range 550 nm to 650 nm.

3. Ink-jet ink according to Claim 1 or 2, **characterized in that** the fraction of the soluble dye is 0.5-20% by weight.

4. Ink-jet ink according to Claim 3, **characterized in that** the fraction of the soluble dye is 1-10% by weight.

5. Ink-jet ink according to Claim 4, **characterized in that** the fraction of soluble dye is 4-8% by weight.

6. Ink-jet ink according to one of Claims 1 to 5, **characterized in that** the fraction of the pigment dye is 0.5-20% by weight.

7. Ink-jet ink according to Claim 6, **characterized in that** the fraction of the pigment dye is 1-15% by weight.

8. Ink-jet ink according to Claim 7, **characterized in that** the fraction of the pigment dye is 1-5% by weight.

9. Ink-jet ink according to Claim 8, **characterized in that** the fraction of the pigment dye is 1.5-3% by weight.

10. Ink-jet ink according to one of Claims 1 to 9, **characterized in that** the pigment dye comprises black pigment.

11. Ink-jet ink according to one of Claims 1 to 10, **characterized in that** the pigment dye has an average particle size of 0.005-15 µm.

12. Ink-jet ink according to Claim 11, **characterized in that** the pigment dye has an average particle size of 0.005-5 µm.

13. Ink-jet ink according to Claim 12, **characterized in that** the pigment dye has an average particle size of 0.005-1 µm.

14. Ink-jet ink according to Claim 13, **characterized in that** the pigment dye has an average particle size of 0.005-0.3 µm.

15. Ink-jet ink according to one of Claims 1 to 14, **characterized in that** it is water-based.

16. Use of an ink-jet ink according to one of Claims 1 to 15 for printing transparent print media.

17. Use according to Claim 16, **characterized in that** the printed areas at least partly in transmitted light have an optical density of at least 3.

18. Use of an ink-jet ink according to one of Claims 1 to 15 for printing out medical graphics data.

## Revendications

1. Encre pour jet d'encre contenant un solvant et un colorant à pigment, **caractérisée en ce qu'**elle contient en plus un colorant soluble dans le solvant, dont le maximum d'absorption se situe dans une gamme de longueurs d'ondes de 500 mm à 700 mm.

2. Encre pour jet d'encre selon la revendication 1, **caractérisée en ce que** le maximum d'absorption se situe dans une gamme de longueures d'ondes de 500 mm à 650 mm.

3. Encre pour jet d'encre selon l'une quelconque des revendications 1 ou 2, **caractérisée en ce que** la proportion en colorant soluble est de 0,5-20 % en poids.

4. Encre pour jet d'encre selon la revendication 3, **caractérisée en ce que** la proportion en colorant soluble est de 1-10 % en poids.

5. Encre pour jet d'encre selon la revendication 4, **caractérisée en ce que** la proportion en colorant soluble est de 4-8 % en poids.

6. Encre pour jet d'encre selon l'une quelconque des revendications 1 à 5, **caractérisée en ce que** la proportion en colorant à pigment est de 0,5-20 % en poids.

7. Encre pour jet d'encre selon la revendication 6, **caractérisée en ce que** la proportion en colorant à pigment est de 1-15 % en poids.

8. Encre pour jet d'encre selon la revendication 7, **caractérisée en ce que** la proportion en colorant à pigment est de 1-5 % en poids.

9. Encre pour jet d'encre selon la revendication 8, **caractérisée en ce que** la proportion en colorant à pigment est de 1,5-3 % en poids.

10. Encre pour jet d'encre selon l'une quelconque des revendications 1 à 9, **caractérisée en ce que** le colorant à pigment contient un pigment noir.

11. Encre pour jet d'encre selon l'une quelconque des revendications 1 à 10, **caractérisée en ce que** le colorant à pigment présente une dimension moyenne des particules de 0,005-15 µm.

12. Encre à jet d'encre selon la revendication 11, **caractérisée en ce que** le colorant à pigment présente une dimension moyenne des particules de 0,005-5 µm.

13. Encre pour jet d'encre selon la revendication 12, **caractérisée en ce que** le colorant à pigment présente une dimension moyenne des particules de 0,005-1 µm.

14. Encre pour jet d'encre selon la revendication 13, **caractérisée en ce que** le colorant à pigment présente une dimension moyenne des particules de 0,005-0,3 µm.

15. Encre pour jet d'encre selon l'une quelconque des revendications 1 à 14, **caractérisée en ce qu'**elle est à base d'eau.

16. Utilisation d'une encre pour jet d'encre selon l'une quelconque des revendications 1 à 15 pour l'impression de supports d'impression transparents.

17. Utilisation selon la revendication 16, **caractérisée en ce que** les surfaces imprimées présentent au moins partiellement en lumière transmise une densité optique de 3 au moins.

18. Utilisation d'une encre pour jet d'encre selon l'une quelconque des revendications 1 à 15 pour l'impression de données graphiques médicales.
